# EUROPÄISCHE PATENTSCHRIFT

(11) **EP 3 086 986 B1**
(45) Veröffentlichungstag und Bekanntmachung des Hinweises auf die Patenterteilung: **18.12.2019**
(21) Anmeldenummer: 14789296.2
(22) Anmeldetag: 27.10.2014
(51) Int. Cl.: B60T 8/40, B60T 8/44

(54) **HYDRAULISCHES BREMSSYSTEM UND VERFAHREN ZUM BETREIBEN EINES HYDRAULISCHEN BREMSSYSTEMS**
HYDRAULIC BRAKE SYSTEM AND METHOD FOR OPERATING A HYDRAULIC BRAKE SYSTEM
SYSTÈME DE FREINAGE HYDRAULIQUE ET PROCÉDÉ POUR FAIRE FONCTIONNER UN SYSTÈME DE FREINAGE HYDRAULIQUE

(30) Priorität: 23.12.2013 DE 102013227066
(43) Veröffentlichungstag der Anmeldung: 02.11.2016
(73) Patentinhaber: Robert Bosch GmbH, 70442 Stuttgart (DE)
(72) Erfinder: BAUER, Urs, 74343 Sachsenheim (DE); WILLMANN, Karl-Heinz, 71691 Freiberg (DE); QUIRANT, Werner, 71717 Beilstein (DE)
(86) Internationale Anmeldenummer: PCT/EP2014/072984
(87) Internationale Veröffentlichungsnummer: WO 2015/096914

(56) Entgegenhaltungen:
- EP-A1- 2 671 770
- WO-A1-97/02165
- WO-A1-2012/143312
- WO-A1-2012/146461
- WO-A2-2012/143175
- DE-A1-102010 040 097
- DE-A1-102012 210 809
- US-A- 5 277 483

## Beschreibung

### Stand der Technik

Die Offenlegungsschrift DE 10 2010040097 A1 offenbart eine Bremsanlage für Kraftfahrzeuge, die sowohl vom Fahrzeugführer als auch unabhängig vom Fahrzeugführer ansteuerbar ist. Die offenbarte Bremsanlage weist u. a. eine elektrohydraulische Druckbereitstellungseinrichtung, die einen Bremssystemdruck abgibt, sowie eine Druckmodulationseinheit auf, die pro Radbremse ein Einlassventil sowie ein Auslassventil zum Einstellen radindividueller Bremsdrücke aufweist. Um Irritationen des Fahrzeugführers insbesondere bei einem Ausfall des elektrischen Bordnetzes des Kraftfahrzeuges zu vermeiden sind zwischen der Druckbereitstellungseinrichtung und der Druckmodulationseinheit kreisweise elektrisch betätigbare Zuschaltventile zwischen geschaltet, die in einem angesteuerten Zustand eine hydraulische Verbindung zwischen der Druckbereitstellungseinrichtung und der Druckmodulationseinheit herstellen.

Hydraulische Bremssysteme mit einer ersten und mit einer zweiten Druckerzeugungseinheit sind darüber hinaus auch aus der WO 2012/1433312 A1 und aus der WO 2012/143175 A1 bekannt. Diese Bremssysteme weisen jeweils Unterbrechungsmittel auf, die über einen Hydraulikanschluss mit der zweiten Druckerzeugungseinheit kontaktiert sind. Allerdings fehlt es diesem Stand der Technik an einer hydraulischen Verbindung des Hydraulikanschluss mit einer Förderseite einer Hydraulikfördereinrichtung der zweiten Druckerzeugungseinheit.

Die Erfindung nach Anspruch 1 ist gegenüber dem in der WO2012/143175A2 offenbarten Gegenstand begrenzt.

### Offenbarung der Erfindung

Bei dem erfindungsgemäßen hydraulischen Bremssystem nach Anspruch 1 ist die erste Druckerzeugungseinheit ist mit der zweiten Druckerzeugungseinheit über erste Unterbrechungsmittel hydraulisch unterbrechbar und unumfließbar verbunden. Bei geschlossener Stellung des ersten Unterbrechungsmittels ist somit keine hydraulische Verbindung zwischen der ersten Druckerzeugungseinheit und der zweiten Druckerzeugungseinheit mehr möglich. Eine Realisierung der ersten Bremsdruckerzeugungseinheit kann ein Plunger sein, der aktiv Volumen an Bremsflüssigkeit verschieben und somit Druck aufbauen kann. Die zweite Druckerzeugungseinheit kann durch ein bekanntes ESP Hydraulikaggregat zur Raddruckmodulation realisiert sein. Die Verbindung von Plunger und Hydraulikaggregat erfolgt über unumfließbare Trennventile, die sich in der hydraulischen Verbindung zwischen Plunger und Aggregat befinden. Diese Trennventile haben explizit keine Rückschlagventile parallel geschaltet und ermöglichen bei geschlossener Stellung eine vollkommene hydraulische Trennung zwischen Plunger und Hydraulikaggregat. In vorteilhafter Weise sind somit im Bremssystem zweierlei Möglichkeiten zum Druckaufbau vorhanden, die beide eine aktive Druckeinstellung ermöglichen. Durch die unumfließbare Verbindung zwischen erster und zweiter Bremsdruckerzeugungseinheit über die Trennventile kann verhindert werden, dass Rückwirkungen vom Druckaufbau mittels des Hydraulikaggregats in Richtung des Plungers erfolgen. Ebensowenig können Druckspitzen, die Druckaufbau innerhalb des Hydraulikaggregats bei geschlossenen Trennventilen über den Plunger zurück zum Fahrer gelangen und diesen negativ bezüglich des Pedalgefühls beeinträchtigen.

Darüber hinaus weist die zweite Druckerzeugungseinrichtung wenigstens einen Hydraulikanschluss auf, der in hydraulischer Verbindung mit den ersten Unterbrechungsmitteln, also den unumfließbaren Trennventilen steht. Dabei sind die Trennventile baulich von der zweiten Druckerzeugungseinrichtung separiert. Durch die bauliche Separierung der Trennventile vom Hydraulikaggregat ist eine flexiblere Verbauung des gesamten Bremssystems möglich. Die Trennventile können beispielsweise auch als Anbaustück für das Hydraulikaggregat vorliegen. Auf Grund der Tatsache, dass die zusätzlichen Trennventile nicht im Hydraulikaggregat verbaut sind, kann ein nur geringfügigverändertes Hydraulikaggregat verwendet werden, welches einem Standard Aggregat von Herstellern baulich sehr ähnlich ist. Auf diese Weise können Synergieeffekte n der Herstellung der Hydraulikaggregate genutzt werden.

Beim hydraulischen Bremssystem sind die ersten Unterbrechungsmittel über den Hydraulikanschluss der zweiten Bremsdruckerzeugungseinrichtung, über wenigstens ein Radeinlassventil sowie über wenigstens ein Radauslassventil mit einem Hydraulikspeicher der zweiten Druckerzeugungseinrichtung verbindbar. Ebenso kann diese Verbindung noch zusätzlich über die entsprechenden Radbremszylinder erfolgen. Die hydraulische Verbindbarkeit von Plunger als erster Bremsdruckerzeugungseinrichtung mit dem Hydraulikspeicher der zweiten Bremsdruckerzeugungseinrichtung ermöglicht in vorteilhafter Weise einen Druckausgleich bei regenerativem Bremsen, der notwendig sein kann um ein hydraulisches Bremsmoment an ein regeneratives Bremsmoment anzupassen. Ebenso kann n den Hydraulikspeicher aufgenommene Hydraulikflüssigkeit wieder dem Plunger aus dem Hydraulikspeicher zugeführt werden.

Die zweite Druckerzeugungseinrichtung weist eine Hydraulikfördereinrichtung auf, die in Verbindung mit dem Hydraulikspeicher steht, und die Teil der zweiten Druckerzeugungseinrichtung ist. Eine solche Hydraulikfördereinrichtung liegt im Hydraulikaggregat in Form einer Pumpe, beispielsweise einer Rückförderpumpe vor. Das Vorsehen einer solchen Pumpe im Hydraulikaggregat ermöglicht neben den bekannten Funktionalitäten einer Raddruckmodulation im ESP-Betrieb zusätzlich die bereits erwähnte Redundanz bei Ausfall des Plungers und erhöht somit die Sicherheit.

Die Hydraulikfördereinrichtung in Form der Pumpe des Hydraulikaggregats steht mit weiteren Unterbrechungsmitteln hydraulisch unumfließbar in Verbindung. Über die weiteren Unterbrechungsmittel kann die Hydraulikfördereinrichtung derart mit einem Hauptbremszylinder verbunden werden, dass in geschlossenem Zustand der zweiten Unterbrechungsmittel keine hydraulische Verbindung zwischen der Hydraulikfördereinrichtung und dem Hauptbremszylinder existiert. Im Gegensatz zu bekannten Trennventilen von raddruckmodulierenden Hydraulikaggregaten ist somit kein Pulsieren bei Betreiben der Pumpe am Bremspedal für den Fahrer zu spüren, da kein Hydraulikfluss bei geschlossenen weiteren Trennventilen zwischen Pumpe und Hauptbremszylinder möglich ist. Dies hat einen erhöhten Bedienkomfort zur Folge.

Beim hydraulischen Bremssystem nach Anspruch 1 ist der Hydraulikspeicher zusammen mit der Eingangsseite der Hydraulikfördereinrichtung über dritte Unterbrechungsmittel zwischen dem Hauptbremszylinder und den zweiten Unterbrechungsmitteln hydraulisch angeschlossen. Dadurch kann Volumen an Bremsflüssigkeit aus dem Hydraulikspeicher wieder direkt in Richtung des Hauptbremszylinders, und so auch zum Ausgleichbehälter, also dem Reservoir zugeführt werden.

Erfindungsgemäß umfasst das hydraulische Bremssystem einen Hauptbremszylinder, der in hydraulischer Verbindung mit einer Simulatoreinrichtung steht. Auf diese Weise kann der Fahrer im Normalbetrieb einen Pedalsimulator betätigen wodurch ihm sein gewohntes Pedalgefühl vermittelt wird.

In Weiterbildung des hydraulischen Bremssystems ist zwischen den ersten Unterbrechungsmitteln und dem Hydraulikanschluss des Hydraulikaggregats wenigstens ein Druckgeber angeschlossen. Ein solcher Druckgeber, ist beispielsweise ein Drucksensor, der zwischen den Trennventilen und dem Hydraulikanschluss angeschlossen ist. Anhand dieses Drucksensors lässt sich in vorteilhafter Weise ein Druck bestimmen der seitens des Plungers dem Hydraulikaggregat zugeführt wird. Und somit der Plunger noch genauer regeln.

In Weiterbildung des hydraulischen Bremssystems steht die erste Bremsdruckerzeugungseinrichtung sowie die zweite Bremsdruckerzeugungseinrichtung mit einem Hauptbremszylinder in hydraulischer Verbindung. Dadurch wird ermöglicht, dass sowohl der Plunger als erste Bremsdruckerzeugungseinrichtung als auch das Hydrraulikaggregat über den Hauptbremszylinder und dem damit verbundenen Reservoir mit Hydraulikflüssigkeit versorgt werden kann.

In Ausgestaltung es hydraulischen Bremssystems kann sowohl mittels der ersten Bremsdruckerzeugungseinrichtung als auch mittels der zweiten Bremsdruckerzeugungseinrichtung fahrerunabhängig Druck an den Radbremszylindern des Bremssystems aufgebaut werden. Auf diese Weise ist eine redundante Druckversorgung des Bremssystems gewähleistet. Bei Ausfall einer der Bremsdruckerzeugungseinheiten kann dann mittels der anderen Bremsdruckerzeugungseinheit ein Bremsdruck aufgebaut werden, was die Sichehrheit des gesamten Systems erhöht.

In weiterer Ausgestaltung des erfindungsgemäßen hydraulischen Bremssystems ist die Simulatoreinrichtung eingangsseitig mit dem Hauptbremszylinder verbunden, sowie ausgangsseitig über ein Simulatorsperrventil mit einem Ausgleichsbehälter des Bremssystems verbunden ist. Das Simulatorsperrventil ist nicht dabei nicht Teil der zweiten Druckerzeugungseinrichtung. Dieser Simulator ist durch Schalten des Sperrventils jedoch sperrbar, was bedeutet, dass durch Öffnen des Sperrventils der Simulator - zumindest anteilig - ausser Kraft gesetzt werden kann.

In weiterer Ausgestaltung ist die Simulatoreinrichtung ausgangsseitig sowohl mit dem Hauptbremszylinder als auch mit dem Ausgleichsbehälter über das Simulatorsperrventil verbunden

Mittels des hydraulischen Bremssystems ist für den Fall dass, wenn das zur Verfügung stehende Volumen an Hydraulikflüssigkeit seitens der ersten Bremsdruckerzeugungseinrichtung geringer als ein erster Volumen-Grenzwert (V_grenz) ist, Hydraulikflüssigkeit mittels der Hydraulikfördereinrichtung, also der Pumpe aus dem Ausgleichsbehälter förderbar. Auch im Falle eines Defekts der ersten Bremsdruckerzeugungseinrichtung kann so die zweite Bremsdruckerzeugungseinrichtung im Backup-Modus den Bremsdruckaufbau weiterhin gewährleisten.

Das erfindungsgemäße Verfahren zum Betreiben eines hydraulischen Bremssystems welche eine erste Druckerzeugungsungseinheit sowie eine zweite Druckerzeugungsungseinheit umfasst, wobei die erste Druckerzeugungseinheit mit der zweiten Druckerzeugungseinheit über erste Unterbrechungsmittel hydraulisch unterbrechbar unumfließbar derart verbunden ist, unterbindet bei geschlossener Stellung des ersten Unterbrechungsmittels eine hydraulische Verbindung zwischen erster Druckerzeugungseinheit und zweiter Druckerzeugungseinheit. In einer ersten Betriebsart wird der Radbremsdruck in dem wenigstens einen Radbremszylinder alleine mittels der ersten Bremsdruckerzeugungseinrichtung erzeugt wird und über die ersten Unterbrechungsmittel geleitet. Somit kann eindeutig anhand der Stellung der ersten Unterbrechungsmittel im erfindungsgemäßen Verfahren festgelegt werden, ob die erste Bremsdruckerzeugungseinheit an einer Bremsung beteiligt ist. Im Vergleich zu Systemen aus dem Stand der Technik ist eine Rückwirkung aus der zweiten Bremsdruckerzeugungseinheit, beispielsweise über Druckspitzen und/oder Druckschwankungen nicht mehr möglich, wenn das Ventil zwischen Plunger und Hydraulikaggregat geschlossen ist.

In Ausgestaltung des erfindungsgemäßen Verfahrens wird in einer zweiten Betriebsart der Radbremsdruck mittels eines Hauptbremszylinders durch den Fahrer aufgebaut, und über zweite Unterbrechungsmittel zu dem wenigstens einen Radbremszylinder geführt. Die zweiten Unterbrechungsmittel können jedoch auch die Radbremszylinder derart mit dem Hauptbremszylinder auf unumfließbare Art verbinden, dass in geschlossenem Zustand der zweiten Unterbrechungsmittel keine hydraulische Verbindung zwischen Radbremszylinder und Hauptbremszylinder besteht. Durch Stellen der zweiten Unterbrechungsmittel kann somit entschieden werden ob in einem Backup-Modus der Fahrer direkt mit den Radbremszylindern verbunden werden kann, oder ob diese Verbindung vollständig unterbrochen ist. Bei geöffneter Stellung ist ein direkter Durchgriff zu den Radbremsen für den Fahrer möglich und eine Notbremsung kann durchgeführt werden. Im geschlossenen Zustand kann der Fahrer keinen Druck an den Radbremsen aufbauen und das System befindet sich im ersten Betriebsmodus, in dem der Fahrer nur auf den Simulator einwirken muss, und der Radbremsdruck durch den Plunger aufgebaut wird.

In weiterer Ausgestaltung des Verfahrens wird wenn das zur Verfügung stehende Volumen an Hydraulikflüssigkeit seitens der ersten Bremsdruckerzeugungseinrichtung geringer als ein erster Volumen-Grenzwert ist, oder bei Ausfall der ersten Bremsdruckerzeugungseinrichtung, Hydraulikflüssigkeit mittels der Hydraulikfördereinrichtung, welche Teil der zweiten Bremsdruckerzeugungseinrichtung ist aus einem Ausgleichsbehälter gefördert und so der Bremsdruckaufbau gewährleistet.

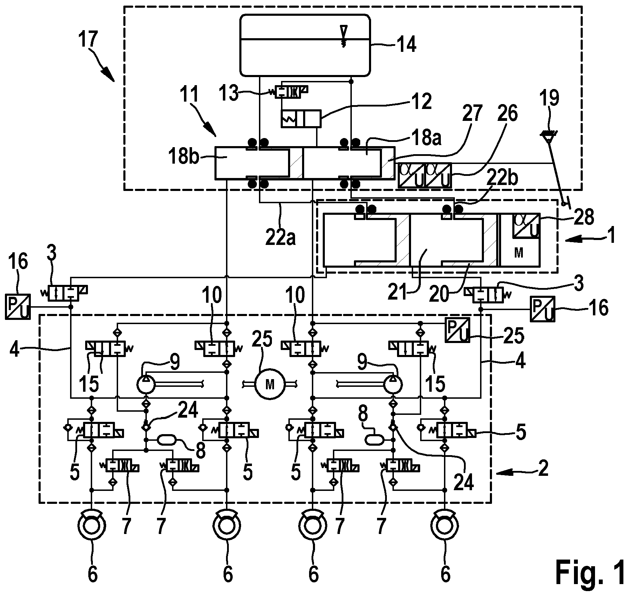

Figur 1 zeigt ein erfindungsgemäßes Bremssystem.

Das erfindungsgemäße Bremssystem umfasst drei wesentliche Elemente.

Zum einen umfasst das Bremssystem einen Hauptbremszylinder 11, der von einem Hydraulikfluidreservoir 14 mit Hydraulikfluid versorgt wird. Ein solcher Hauptbremszylinder 11 kann beispielsweise ein bekannter Tandem-Hauptbremszylinder bestehend aus zwei Kammern sein, die jeweils über Schnüffelbohrungen mit dem Hydraulikfluidreservoir 14 in hydraulischer Verbindung stehen. Wenigstens eine der der Kammern 18a und 18b des Hauptbremszylinders ist mit einem Pedalsimulator 12 verbunden, der beispielsweise eine Kolben-ZylinderAnordnung umfasst, sowie ein elastisches Element, welches einem Fahrer beim Betätigen des Bremssystem ein Pedalgefühl übermitteln kann, welches er bei Betätigung erwartet. Ein Pedalgefühl besteht beispielsweise aus einer Pedalkraft-Pedalweg-Kennlinie, die dem jeweiligen Pedalgefühl entspricht. Darüber hinaus ist der Pedalsimulator durch ein Ventil 13 verriegelbar, welches die hydraulische Verbindung einer hinteren Kammer des Pedalsimulators 12 mit dem Hydraulikfluidreservoir 14 öffnet und/oder schließt. Zwischenpositionen des Ventils sind ebenfalls denkbar. Somit kann der Pedalsimulator aktiv geschaltet werden, und nach Bedarf auch wieder inaktiv, abhängig von der Stellung des Ventils 13. Darüber hinaus kann das Ventil 13 noch zusätzliche Drosselfunktionen aufweisen, welche es ermöglichen die Pedalcharakteristik zu modifizieren.

Der Hauptbremszylinder 11 kann in bekannter Weise von einem Fahrer über ein Bremseingabeelement 19 - beispielsweise ein Bremspedal oder ein Bremshebel - mit Kraft beaufschlagt werden und so eine Bremsung herbeiführen. Dabei kann je nach Stellung des Ventils 13 der Pedalsimulator 12 mit Kraft beaufschlagt werden, oder alternativ - wie im Folgenden dargestellt werden wird, auch direkt eine Bremsung an Radbremszylindern 6 erreicht werden.

Im vorliegenden Bremssystem betätigt der Fahrer den Hauptbremszylinder 11 unverstärkt, also ohne zusätzliche Unterstützung seitens eines Bremskraftverstärkers. Zur Erfassung des Fahrerbremswunsches, also zur Vorgabe der vom Fahrer gewünschten Verzögerung des Fahrzeugs weist das Bremssystem eine entsprechende Sensorik 26 auf. Dies kann beispielsweise eine redundante Wegsensorik zur Erfassung des Pedalwegs bei Bremsbetätigung oder auch eine Kraftsensorik zur Erfassung der Pedalkraft sein. Die Bremswunscherfassung kann auch alleine und/oder im Zusammenspiel mit dem weiter unten erläuterten Bremsdruckgeber 25 erfolgen.

Als weiteren Bestandteil umfasst das Bremssystem eine erste Druckerzeugungseinheit 1, welche in der Lage ist Hydraulikflüssigkeit mit Kraft zu beaufschlagen und so unter Druck dem übrigen Bremssystem oder zumindest Teilen davon zur Verfügung zu stellen. Die erste Bremsdruckerzeugungseinheit 1 kann beispielsweise in Form eines Plungers vorliegen, der wenigstens einen Kolben 20 sowie wenigstens eine Hydraulikammer 21 aufweist. Die Hydraulikkammer 21 kann durch den Kolben sowie durch eine Wandung eines den Kolben aufnehmenden Zylinders gebildet sein. Ebenso ist denkbar, wie in Figur 1 dargestellt, dass der Plunger ein Doppel-Plunger ist, der jedem Bremskreis des Bremssystems jeweils eine Hydraulikkammer zur Verfügung stellt.

Über Hydraulikleitungen 22a und 22b sind die Kammern 21 des Plungers mit den entsprechenden Kammern 18a und 18b des Hauptbremszylinders 11 verbunden. Im Falle, dass der Plunger mit einer einzelnen Kammer vorliegt, existiert nur eine einzelne verzweigte Hydraulikleitung 22a, die dann mit beiden Kammern 18a und 18b des Hauptbremszylinders 11 in hydraulischer Verbindung steht. Über die Hydraulikleitungen 22a und gegebenenfalls 22b kann dem Plunger Hydraulikflüssigkeit zugeführt werden, welche vom Hydraulikfluidreservoir 14 durch den Hauptbremszylinder 11 - durch dessen Kammern 18a und 18b - zum Plunger 1 gelangen kann. Die Hydraulikleitungen 22a und 22b entsprechen somit Versorgungsleitungen des Plungers. Auf diese Weise steht dem Plunger genug Hydraulikflüssigkeit zur Verfügung um später eine Bremsung durch Verschieben von Hydraulikflüssigkeit zu erreichen. Um Hydraulikflüssigkeit zu verschieben, umfasst der Plunger zusätzlich einen Antriebsmotor, welcher einen oder mehrere Kolben 20 des Plungers in Bewegung versetzen kann und somit Volumen aus dem Innenvolumen des Plungers herausschiebt.

Dritter Bestandteil des erfindungsgemäßen Bremssystems ist eine zweite Bremsdruckerzeugungseinrichtung 2 in Form einer Modulationseinrichtung. Eine solche Einrichtung ist als ESP-Hydraulikaggregat bekannt und muss zur erfindungsgemäßen Nutzung jedoch in einigen Aspekten angepasst werden. Die zweite Bremsdruckerzeugungseinrichtung umfasst pro hydraulischen Bremskreis jeweils den angeschlossenen Radbremszylindern 6 zugeordnete Einlassventile 5 sowie Auslassventile 7, welche die Versorgung der Radbremszylinder mit Hydraulikfluid steuern und/oder regeln können. Den Einlassventilen 5 sind Rückschlagventile parallel geschaltet, die einen Hydraulikfluss in Richtung der Radbremszylinder vom Plunger 1 und /oder vom Hauptbremszylinder 11 her kommend unterbinden. Die Auslassventile sind saugseitig mit einer Rückförderpumpe 9 verbunden. Ebenso saugseitig steht die Rückförderpumpe 9 über ein Hochdruckschaltventil 15 in hydraulischer Verbindung mit einer der Kammern 18a oder 18b des Hauptbremszylinders 11. Zwischen den Auslassventilen 7 und dem saugseitigem Anschluss der Pumpe 9 befindet sich ein Rückschlagventil 24 welches einen Fluss an Hydraulikflüssigkeit von der Pumpe in Richtung der Auslassventile 7 unterbindet. Zwischen Auslassventil 7 und Rückschlagventil ist ein Hydraulikspeicher 8 hydraulisch angeschlossen.

Die Pumpe 9 steht mit Ihrer Förderseite in hydraulischer Verbindung mit den Einlassventilen 5 und gleichzeitig über Umschaltventile 10 mit den Kammern 18a und 18b des Hauptbremszylinders 11. Die Pumpe 9 wird von einem Pumpenmotor 28 angetrieben.

Im Unterschied zu bekannten Hydraulikaggregaten zur Bremsdruckmodulation ist den Umschaltventilen 10, an die die Pumpe 9 mit Ihrer Saugseite angeschlossen ist kein Rückschlagventil parallel geschaltet. Die Umschaltventile 9 verbinden die Einlassventile 5 unumfließbar mit den Kammern des Hauptbremszylinders 11. Somit ist bei geschlossener Stellung des Umschaltventls ein Hydraulikfluss von Hauptbremszylinder in Richtung der Radbremszylinder 6 unterbunden.

Darüber hinaus weist die zweite Bremsdruckerzeugungseinrichtung 2 jeweils einen Hydraulikanschluss 4 auf, welcher in hydraulischer Verbindung mit den Einlassventilen 5, der Saugseite der Pumpe 9 und den Umschaltventilen 10 steht. Der Hydraulikanschluss 4 dient dem Anschluss des Plungers 1 an die zweite Bremsdruckerzeugungseinrichtung 2.

Der Anschluss des Plungers 1 an die Hydraulikanschlüsse 4 erfolgt über Trennventile 3, welche in geschlossenem Zustand eine Verbindung zwischen dem Kammern 21 des Plungers 1 und der zweiten Bremsdruckerzeugungseinrichtung 2 vollständig unterbinden. Die Trennventile 3 weisen ebenfalls keine Rückschlagventile auf. Die Trennventile sind in der hydraulischen Verbindung von Plunger 1 zur zweiten Bremsdruckerzeugungseinrichtung 2 unumfließbar verbaut.

Die Trennventile 3 sind nicht Teil der zweiten Bremsdruckerzeugungseinrichtung 2 und liegen als separate Bauteile vor.

Zwischen den Trennventilen 3 und den Anschlüssen 4 der zweiten Bremsdruckerzeugungseinrichtung 2 sind Bremsdruckgeber 16 vorgesehen, mittels derer der Druck ausgehend vom Plunger 1 ermittelbar ist.

Der Primärbremskreis, also der Bremskreis welcher an der ersten Kammer 18a des Hauptbremszylinders 11 angeschlossen ist, weist zwischen der ersten Kammer 18a und dem Hochdruckschaltventil 15 einen Anschluss für einen weiteren Bremsdruckgeber 25 auf, der Teil der zweiten Bremsdruckerzeugungseinrichtung ist.

Sowohl der Hauptbremszylinder 11 als auch der Plunger 1 weisen sogenannte Schnüffelbohrungen auf, welche durch Überfahren von Öffnungen in den entsprechenden Kolben-Zylinder-Anordnungen die Verbindung der jeweiligen Kammern 18a oder 18b beim Hauptbremszylinder, bzw. der Kammer(n) des Plungers 21 zu anderen Komponenten des Bremssystems verschließen können. So kann beim Plunger 1 durch Verschieben des Kolbens 20 mittels des Elektromotors eine Schnüffelbohrung in der Kammer 21, welche in unbetätigtem Zustand des Plungers geöffnet ist verschlossen werden. Dadurch wird die hydraulische Verbindung zum Hauptbremszylinder 11 unterbrochen. In analoger Weise kann durch Verschieben des Kolbens 27 die Verbindung der Kammer 18a zum Plunger 1 und zum Hydraulikfluidreservoir 14 geschlossen werden. Das Verschließen von Schnüffelbohrungen gilt auch für die zweiten Kammern des Hauptbremszylinders 11 oder des Plungers 1.

Alternativ kann auch ein Hochdruckspeicher anstelle des Plungers 1 zur Verwendung kommen.

Das dargestellte erfindungsgemäße Bremssystem ermöglicht einen Bremsdruckaufbau auf unterschiedliche Arten.

Zum einen kann der Fahrer, wie bereits dargestellt, den Bremswunsch durch die Pedalbetätigung vorgeben. Der Bremsdruck wird entsprechend dem Bremswunsch mittels der ersten Bremsdruckerzeugungseinrichtung 1 eingestellt. Dabei befinden sich die Hochdruckschaltventile 15 und die Umschaltventile 15 in geschlossenem Zustand, die Einlassventile 5 zu den Radbremszylindern 6 sind geschlossen und die Auslassventile der mit Druck zu beaufschlagenden Räder sind geschlossen. Ausgehend von der Kammer 21 des Plungers 1 wird die Hydraulikflüssigkeit, welche sich im Plunger befindet über die Trennventile 3 in die zweite Bremsdruckerzeugungseinrichtung geführt und kann somit an den Radbremszylindern 6 einen Bremsdruck einstellen. Der Bremsdruck kann somit aufgebaut, und durch Zurückfahren der Plungerkolben 21 auch wieder reduziert werden.

Mittels der zweiten Bremsdruckerzeugungseinrichtung 2 kann in bekannter Manier eine Raddruckmodulation durchgeführt werden, beispielsweise durch Ableiten von Hydraulikflüssigkeit aus den Radbremszylindern 6 über die Auslassventile 7 in die Hydraulikspeicher 8 oder durch Rückfördern von Volumen an Hydraulikflüssigkeit mittels der Pumpen 9. Die Raddruckmodulation, insbesondere Druckauf- und Druckabbau kann radindividuell erfolgen.

Bei Ausfall der ersten Druckerzeugungseinrichtung 1, beispielsweise des Plungers 1 kann mittels der zweiten Bremsdruckerzeugungseinrichtung 2 der Bremsdruck aufgebaut werden. Somit ist eine Rückfallebene im Bremssystem vorhanden.

Ferner kann, wenn das zur Verfügung stehende Volumen an Hydraulikflüssigkeit seitens der ersten Bremsdruckerzeugungseinrichtung (2) geringer als ein erster Volumen-Grenzwert (V_grenz) ist, Hydraulikflüssigkeit mittels einer Hydraulikfördereinrichtung (9), welche Teil der zweiten Bremsdruckerzeugungseinrichtung (2) ist aus einem Ausgleichsbehälter (14) gefördert werden.

In diesem Betätigungsmodus betätigt der Fahrer den Pedalsimulator 12, wodurch das Pedalgefühl vermittelt wird.

Ebenso weist das Bremssystem eine mechanische Rückfallebene auf, in der der Fahrer rein mechanisch die Radbremszylinder direkt durch die vom Fahrer aufgebrachte Pedalkraft mit Druck beaufschlagen kann und so immer noch eine Bremswirkung erzielt. Dies kann beispielsweise bei einem vollständigen Bordnetzausfall notwendig sein.

Bei regenerativen Bremsungen kann mittels des Bremssystems eine generatorische Bremswirkung eines als Generator betriebenen Antriebsmotors verblendet werden, indem die Bremswirkung seitens des Plungers angepasst wird. Bei Zuschalten einer generatorischen Bremswirkung wird die Bremswirkung des hydraulischen Bremssystems mittels des Plungers reduziert. Ein notwendiger Volumenausgleich beim regenerativen Bremsen kann dabei zusätzlich mittels der zweiten Bremsdruckerzeugungseinrichtung gewährleistet werden, beispielsweise durch Aufnahme an Hydraulkflüssigkeit in die Hydraulikspeicher 8 bei Zuschalten einer regenerativen Bremswirkung. Für den Fahrer bleibt der Vorgang des Zuschaltens oder Abschaltens einer regenerativen Bremswirkung oder auch ein veränderlicher Anteil einer regenerativen Bremswirkung an der gesamten Bremswirkung am Bremspedal vollkommen unbemerkt, da er durch die geschlossenen Umschalt- und Hochdruckschaltventile 10 und 15 hydraulisch vom Rest des Bremssystems entkoppelt ist.

## Patentansprüche

1. Hydraulisches Bremssystem
- mit einer ersten Druckerzeugungseinheit (1) sowie
- mit einer zweiten Druckerzeugungseinheit (2),
- wobei die zweite Druckerzeugungseinheit (2) zu einer steuer- und/oder regelbaren Versorgung einer angeschlossenen Radbremse (6) mit Hydraulikfluid ein der Radbremse (6) zugeordnetes Radeinlassventil (5), ein Radauslassventil (7) sowie eine förderseitig mit dem Radeinlassventil (5) verbundene Hydraulikfördereinrichtung (9) aufweist,
- wobei die erste Druckerzeugungseinheit (1) mit der zweiten Druckerzeugungseinheit (2) über erste Unterbrechungsmittel (3) hydraulisch unterbrechbar derart unumfließbar verbunden ist, dass bei geschlossener Stellung der ersten Unterbrechungsmittel (3) keine hydraulische Verbindung zwischen erster Druckerzeugungseinheit (1) und zweiter Druckerzeugungseinheit (2) mehr möglich ist,
- wobei die zweite Druckerzeugungseinheit (2) wenigstens einen Hydraulikanschluss (4) aufweist, der in Verbindung mit den ersten Unterbrechungsmitteln (3) steht,
- wobei die ersten Unterbrechungsmittel (3) von der zweiten Druckerzeugungseinrichtung (2) baulich separiert sind,
- wobei die ersten Unterbrechungsmittel (3) über den wenigstens einen Hydraulikanschluss (4), das Radeinlassventil (5) das Radauslassventil (7) sowie über wenigstens einen Radbremszylinder (6) mit einem Hydraulikspeicher (8) verbindbar sind,
- wobei die Hydraulikfördereinrichtung (9) der zweiten Druckerzeugungseinheit (2) saugseitig mit dem Radauslassventil (7) verbunden ist,
- wobei der Hydraulikspeicher (8) zusammen mit der Eingangsseite der Hydraulikfördereinrichtung (9) über dritte Unterbrechungsmittel (15) zwischen dem Hauptbremszylinder (11) und zweiten Unterbrechungsmitteln (10) hydraulisch angeschlossen ist,
- wobei die Hydraulikfördereinrichtung (9) mit den zweiten Unterbrechungsmitteln (10) hydraulisch in Verbindung steht, welche die Hydraulikfördereinrichtung (9) mit einem Hauptbremszylinder (11) verbinden,
- wobei der Hauptbremszylinder (11) in hydraulischer Verbindung mit einer Simulatoreinrichtung (12) steht und
- wobei die Simulatoreinrichtung (12) eingangsseitig mit dem Hauptbremszylinder (11) verbunden ist,
**dadurch gekennzeichnet,**
- **dass** die Simulatoreinrichtung ausgangsseitig über ein Simulatorsperrventil (13) mit einem Ausgleichsbehälter (14) des Bremssystems verbunden ist,
- **dass** die zweiten Unterbrechungsmittel (10) hydraulisch unumfließbar sind, so dass in geschlossenem Zustand der zweiten Unterbrechungsmittel (10) keine hydraulische Verbindung zwischen der Hydraulikfördereinrichtung (9) und dem Hauptbremszylinder (11) und zwischen dem Hauptbremszylinder (11) und der Hydraulikfördereinrichtung (9) existiert und
- **dass** jeweils eines der ersten Unterbrechungsmittel (3) über den wenigstens einen Hydraulikanschluss (4) der zweiten Druckerzeugungseinheit (2) mit einer Förderseite der Hydraulikfördereinrichtung (9) der zweiten Druckerzeugungseinheit (2), mit dem Radeinlassventil (5) und mit einem der zweiten Unterbrechungsmittel (10) in hydraulischer Verbindung steht.

2. Hydraulisches Bremssystem nach Anspruch 1, **dadurch gekennzeichnet, dass** zwischen den ersten Unterbrechungsmitteln (3) und dem Hydraulikanschluss (4) wenigstens ein Druckgeber (16) angeschlossen ist.

3. Hydraulisches Bremssystem nach Anspruch 1 oder 2, **dadurch gekennzeichnet, dass** sowohl die erste Druckerzeugungseinheit (1) als auch die zweite Druckerzeugungseinheit (2) mit dem Hauptbremszylinder (11) in hydraulischer Verbindung stehen.

4. Hydraulisches Bremssystem nach einem der Ansprüche 1 bis 3, **dadurch gekennzeichnet, dass** sowohl mittels der ersten Druckerzeugungseinheit (1) als auch mittels der zweiten Druckerzeugungseinheit (2) fahrerunabhängig Druck aufbaubaubar ist.

5. Hydraulisches Bremssystem nach Anspruch 1, **dadurch gekennzeichnet, dass** der Hydraulikspeicher (8) in Verbindung mit der Hydraulikfördereinrichtung (9) steht.

6. Hydraulisches Bremssystem nach einem der Ansprüche 1 bis 5,
**dadurch gekennzeichnet, dass** das Simulatorsperrventil (13) nicht Teil der zweiten Druckerzeugungseinheit (2) ist.

7. Hydraulisches Bremssystem nach Anspruch 6, **dadurch gekennzeichnet, dass** die Simulatoreinrichtung (12) ausgangsseitig sowohl mit dem Hauptbremszylinder (11) als auch mit dem Ausgleichsbehälter (14) über das Simulatorsperrventil (13) verbunden ist.

8. Hydraulisches Bremssystem nach Anspruch 6, **dadurch gekennzeichnet, dass** wenn das zur Verfügung stehende Volumen an Hydraulikflüssigkeit seitens der ersten Druckerzeugungseinheit (1) geringer als ein erster Volumen-Grenzwert (V_grenz) ist, Hydraulikflüssigkeit mittels der Hydraulikfördereinrichtung (9) aus dem Ausgleichsbehälter (14) gefördert wird.

9. Verfahren zum Betreiben eines hydraulischen Bremssystems nach einem der vorgehenden Ansprüche 1 bis 8, wobei in einer ersten Betriebsart der Radbremsdruck in dem wenigstens einen Radbremszylinder (6) alleine, mittels der ersten Bremsdruckerzeugungseinrichtung erzeugt wird und über die ersten Unterbrechungsmittel (3) geleitet wird.

10. Verfahren nach Anspruch 9, **dadurch gekennzeichnet** in einer zweiten Betriebsart der Radbremsdruck mittels eines Hauptbremszylinders (11) durch den Fahrer aufgebaut wird, und über zweite Unterbrechungsmittel (10) zu dem wenigstens einen Radbremszylinder (6) geführt wird, wobei die zweiten Unterbrechungsmittel (10) die Radbremszylinder (6) derart mit dem Hauptbremszylinder (11) unumfließbar verbinden, dass in geschlossenem Zustand der zweiten Unterbrechungsmittel (10) keine hydraulische Verbindung zwischen Radbremszylinder (9) und Hauptbremszylinder (11) besteht.

11. Verfahren nach Anspruch 10 zum Betreiben eines hydraulischen Bremssystems nach Anspruch 6 oder 7, **dadurch gekennzeichnet, dass**
- wenn das zur Verfügung stehende Volumen an Hydraulikflüssigkeit seitens der ersten Druckerzeugungseinheit (1) geringer als ein erster Volumen-Grenzwert (V_grenz) ist,
- oder bei Ausfall der ersten Druckerzeugungseinheit (1), Hydraulikflüssigkeit mittels der Hydraulikfördereinrichtung (9), aus dem Ausgleichsbehälter (14) gefördert wird.

## Claims

1. Hydraulic brake system
- having a first pressure-generating unit (1), and
- having a second pressure-generating unit (2),
- wherein the second pressure-generating unit (2) has, for the purpose of supplying a connected wheel brake (6) with hydraulic fluid under open-loop and/or closed-loop control, a wheel inlet valve (5) assigned to the wheel brake (6), a wheel outlet valve (7) and a hydraulic delivery device (9) which is connected on the delivery side to the wheel inlet valve (5),
- wherein the first pressure-generating unit (1) is connected to the second pressure-generating unit (2) so as to be able to be hydraulically interrupted by a first interruption means (3) in a non-bypassable manner in such a way that, in the closed position of the first interruption means (3), a hydraulic connection between first pressure-generating unit (1) and second pressure-generating unit (2) is no longer possible,
- wherein the second pressure-generating unit (2) has at least one hydraulic connection (4) which is connected to the first interruption means (3),
- wherein the first interruption means (3) are structurally separated from the second pressure-generating device (2),
- wherein the first interruption means (3) can be connected to a hydraulic accumulator (8) via the at least one hydraulic connection (4), the wheel inlet valve (5), the wheel outlet valve (7) and via at least one wheel brake cylinder (6),
- wherein the hydraulic delivery device (9) of the second pressure-generating unit (2) is connected on the suction side to the wheel outlet valve (7),
- wherein the hydraulic accumulator (8) is hydraulically connected, together with the inlet side of the hydraulic delivery device (9), via third interruption means (15) between the master brake cylinder (11) and second interruption means (10),
- wherein the hydraulic delivery device (9) is hydraulically connected to the second interruption means (10) which connect the hydraulic delivery device (9) to a master brake cylinder (11),
- wherein the master brake cylinder (11) is hydraulically connected to a simulator device (12), and
- wherein the simulator device (12) is connected on the inlet side to the master brake cylinder (11),
**characterized**
- **in that** the simulator device is connected on the outlet side via a simulator blocking valve (13) to a compensating reservoir (14) of the brake system,
- **in that** the second interruption means (10) are hydraulically non-bypassable, with the result that, in the closed position of the second interruption means (10), there exists no hydraulic connection between the hydraulic delivery device (9) and the master brake cylinder (11) and between the master brake cylinder (11) and the hydraulic delivery device (9), and
- **in that** in each case one of the first interruption means (3) is hydraulically connected via the at least one hydraulic connection (4) of the second pressure-generating unit (2) to a delivery side of the hydraulic delivery device (9) of the second pressure-generating unit (2), to the wheel inlet valve (5) and to one of the second interruption means (10).

2. Hydraulic brake system according to Claim 1, **characterized in that** at least one pressure sensor (16) is connected between the first interruption means (3) and the hydraulic connection (4).

3. Hydraulic brake system according to Claim 1 or 2, **characterized in that** both the first pressure-generating unit (1) and the second pressure-generating unit (2) are hydraulically connected to the master brake cylinder (11) .

4. Hydraulic brake system according to one of Claims 1 to 3, **characterized in that** pressure can be built up in a driver-independent manner both by means of the first pressure-generating unit (1) and by means of the second pressure-generating unit (2).

5. Hydraulic brake system according to Claim 1, **characterized in that** the hydraulic accumulator (8) is connected to the hydraulic delivery device (9).

6. Hydraulic brake system according to one of Claims 1 to 5, **characterized in that** the simulator blocking valve (13) is not part of the second pressure-generating unit (2) .

7. Hydraulic brake system according to Claim 6, **characterized in that** the simulator device (12) is connected on the outlet side both to the master brake cylinder (11) and to the compensating reservoir (14) via the simulator blocking valve (13).

8. Hydraulic brake system according to Claim 6, **characterized in that**, if the available volume of hydraulic fluid on the part of the first pressure-generating unit (1) is lower than a first volume limit value (V_lim), hydraulic fluid is delivered from the compensating reservoir (14) by means of the hydraulic delivery device (9).

9. Method for operating a hydraulic brake system according to one of the preceding Claims 1 to 8, wherein, in a first operating mode, the wheel brake pressure in the at least one wheel brake cylinder (6) is generated solely by means of the first brake pressure-generating device and is channelled via the first interruption means (3) .

10. Method according to Claim 9, **characterized in that**, in a second operating mode, the wheel brake pressure is built up by the driver by means of a master brake cylinder (11), and is guided via a second interruption means (10) to the at least one wheel brake cylinder (6), wherein the second interruption means (10) connect the wheel brake cylinders (6) to the master brake cylinder (11) in a non-bypassable manner in such a way that, in the closed state of the second interruption means (10), there is no hydraulic connection between wheel brake cylinder (9) and master brake cylinder (11).

11. Method according to Claim 10 for operating a hydraulic brake system according to Claim 6 or 7, **characterized in that**
- if the available volume of hydraulic fluid on the part of the first pressure-generating unit (1) is lower than a first volume limit value (V_lim),
- or, in the event of failure of the first pressure-generating unit (1),
hydraulic fluid is delivered from the compensating reservoir (14) by means of the hydraulic delivery device (9) .

## Revendications

1. Système de freinage hydraulique
- comprenant une première unité de génération de pression (1) et
- comprenant une deuxième unité de génération de pression (2),
- la deuxième unité de génération de pression (2) comprenant, pour une alimentation en fluide hydraulique pouvant être commandée et/ou pouvant être régulée d'un frein de roue (6) raccordé, une soupape d'entrée de roue (5) associée au frein de roue (6), une soupape de sortie de roue (7) ainsi qu'un dispositif de refoulement hydraulique (9) relié à la soupape d'entrée de roue (5) côté refoulement,
- la première unité de génération de pression (1) étant reliée à la deuxième unité de génération de pression (2) de manière pouvant être interrompue hydrauliquement par le biais de premiers moyens d'interruption (3) de manière non contournable de telle sorte qu'en cas de position fermée des premiers moyens d'interruption (3), aucune liaison hydraulique ne soit plus possible entre la première unité de génération de pression (1) et la deuxième unité de génération de pression (2),
- la deuxième unité de génération de pression (2) comprenant au moins un raccord hydraulique (4) qui est en liaison avec les premiers moyens d'interruption (3),
- les premiers moyens d'interruption (3) étant séparés structuralement du deuxième dispositif de génération de pression (2),
- les premiers moyens d'interruption (3) pouvant être reliés à un accumulateur hydraulique (8) par le biais dudit au moins un raccord hydraulique (4), de la soupape d'entrée de roue (5), de la soupape de sortie de roue (7) ainsi que par le biais d'au moins un cylindre de frein de roue (6),
- le dispositif de refoulement hydraulique (9) de la deuxième unité de génération de pression (2) étant relié, côté aspiration, à la soupape de sortie de roue (7),
- l'accumulateur hydraulique (8) étant, conjointement avec le côté d'entrée du dispositif de refoulement hydraulique (9), raccordé hydrauliquement entre le maître-cylindre de frein (11) et des deuxièmes moyens d'interruption (10) par le biais de troisièmes moyens d'interruption (15),
- le dispositif de refoulement hydraulique (9) étant en liaison hydraulique avec des deuxièmes moyens d'interruption (10), lesquels relient le dispositif de refoulement hydraulique (9) à un maître-cylindre de frein (11),
- le maître-cylindre de frein (11) étant en liaison hydraulique avec un dispositif simulateur (12) et
- le dispositif simulateur (12) étant relié, côté entrée, au maître-cylindre de frein (11),
**caractérisé en ce que**
- le dispositif simulateur est relié, côté sortie, à un récipient d'équilibrage (14) du système de freinage par le biais d'une soupape d'arrêt de simulateur (13),
- les deuxièmes moyens d'interruption (10) ne sont pas contournables hydrauliquement, de telle sorte qu'à l'état fermé des deuxièmes moyens d'interruption (10), il n'existe aucune liaison hydraulique entre le dispositif de refoulement hydraulique (9) et le maître-cylindre de frein (11) et entre le maître-cylindre de frein (11) et le dispositif de refoulement hydraulique (9) et
- respectivement l'un des premiers moyens d'interruption (3) est en liaison hydraulique, par le biais dudit au moins un raccord hydraulique (4) de la deuxième unité de génération de pression (2), avec un côté de refoulement du dispositif de refoulement hydraulique (9) de la deuxième unité de génération de pression (2), avec la soupape d'entrée de roue (5) et avec l'un des deuxièmes moyens d'interruption (10).

2. Système de freinage hydraulique selon la revendication 1, **caractérisé en ce qu'**au moins un capteur de pression (16) est raccordé entre les premiers moyens d'interruption (3) et le raccord hydraulique (4).

3. Système de freinage hydraulique selon la revendication 1 ou 2, **caractérisé en ce qu'**à la fois la première unité de génération de pression (1) et la deuxième unité de génération de pression (2) sont en liaison hydraulique avec le maitre-cylindre de frein (11) .

4. Système de freinage hydraulique selon l'une des revendications 1 à 3, **caractérisé en ce qu'**une montée en pression peut être effectuée, indépendamment du conducteur, à la fois au moyen de la première unité de génération de pression (1) et au moyen de la deuxième unité de génération de pression (2).

5. Système de freinage hydraulique selon la revendication 1, **caractérisé en ce que** l'accumulateur hydraulique (8) est en liaison avec le dispositif de refoulement hydraulique (9).

6. Système de freinage hydraulique selon l'une des revendications 1 à 5, **caractérisé en ce que** la soupape d'arrêt de simulateur (13) ne fait pas partie de la deuxième unité de génération de pression (2).

7. Système de freinage hydraulique selon la revendication 6, **caractérisé en ce que** le dispositif simulateur (12) est relié, côté sortie, à la fois au maître-cylindre de frein (11) et au récipient d'équilibrage (14) par le biais de la soupape d'arrêt de simulateur (13).

8. Système de freinage hydraulique selon la revendication 6, **caractérisé en ce que** lorsque le volume de fluide hydraulique disponible du côté de la première unité de génération de pression (1) est inférieur à une première valeur limite de volume (V_grenz), du fluide hydraulique est refoulé hors du récipient d'équilibrage (14) au moyen du dispositif de refoulement hydraulique (9) .

9. Procédé de fonctionnement d'un système de freinage hydraulique selon l'une des revendications précédentes 1 à 8, dans lequel, dans un premier mode de fonctionnement, la pression de frein de roue dans ledit au moins un cylindre de frein de roue (6) est produite au moyen du premier dispositif de génération de pression de frein à lui seul et est transmise par le biais des premiers moyens d'interruption (3).

10. Procédé selon la revendication 9, **caractérisé en ce que**, dans un deuxième mode de fonctionnement, la pression de frein de roue est accrue par le conducteur au moyen d'un maître-cylindre de frein (11), et est guidée jusqu'audit au.moins un cylindre de frein de roue (6) par le biais de deuxièmes moyens d'interruption (10), les deuxièmes moyens d'interruption (10) reliant le cylindre de frein de roue (6) au maître-cylindre de frein (11) de manière non contournable de telle sorte qu'à l'état fermé des deuxièmes moyens d'interruption (10), il n'existe aucune liaison hydraulique entre le cylindre de frein de roue (9) et le maître-cylindre de frein (11).

11. Procédé selon la revendication 10 permettant de faire fonctionner un système de freinage hydraulique selon la revendication 6 ou 7, **caractérisé en ce que**
- lorsque le volume de fluide hydraulique disponible du côté de la première unité de génération de pression (1) est inférieur à une première valeur limite de volume (V_grenz),
- ou en cas de défaillance de la première unité de génération de pression (1),
du fluide hydraulique est refoulé hors du récipient d'équilibrage (14) au moyen du dispositif de refoulement hydraulique (9).
